Europäisches Patentamt

European Patent Office

Office européen des brevets

(11) Veröffentlichungsnummer: **0 290 803 B1**

(19)

(12)

# EUROPÄISCHE PATENTSCHRIFT

(45) Veröffentlichungstag der Patentschrift: **02.09.92**

(21) Anmeldenummer: **88105909.1**

(22) Anmeldetag: **14.04.88**

(51) Int. Cl.⁵: **G11B 15/02**, G11B 15/18, G11B 15/10

(54) **Einknopfbedienung für einfachen Rangierbetrieb bei Videomagnetbandrecordern.**

(30) Priorität: **15.05.87 DE 3716332**

(43) Veröffentlichungstag der Anmeldung:
**17.11.88 Patentblatt 88/46**

(45) Bekanntmachung des Hinweises auf die
Patenterteilung:
**02.09.92 Patentblatt 92/36**

(84) Benannte Vertragsstaaten:
**AT CH DE ES FR GB IT LI**

(56) Entgegenhaltungen:
**EP-A- 0 188 162**
**EP-A- 0 198 658**
**FR-A- 2 491 707**
**FR-A- 2 512 571**
**US-A- 4 139 872**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Kornhaas, Wolfgang
c/o Grundig E.M.V. Kurgartenstrasse 37
W-8510 Fuerth(DE)**

EP 0 290 803 B1

## Beschreibung

Die Erfindung betrifft eine Einknopfbedienung für einfachen Rangierbetrieb bei Videomagnetbandrecordern mit den im Oberbegriff des Anspruchs 1 angegebenen Merkmalen.

Aus der DE-A-31 39 577 ist eine Betriebsarten-wählvorrichtung für ein Videoband-Weidergabege-rät bekannt. Diese Betriebsartenwählvorrichtung umfaßt eine Steuerwelle, die durch einen Steuerknopf drehbar und axial zwischen zwei Stellungen verstellbar ist. Ferner enthält die bekannte Vorichtung Detektoren zur Ermittlung der Winkelstellung, Drehgeschwindigkeit und Drehrichtung der Steuer-welle und einen Verriegelungsmechanismus. Mit-tels dieses Verriegelungsmechanismusses kann die Steuerwelle in jeder der beiden axialen Stellugen verriegelt werden. Bei einem Drücken des Steuerknopfes erfolgt eine Umschaltung von der ersten in die zweite Axialstellung oder umgekehrt. In der ersten Axialstellung wird die Bandgeschwindigkeit entsprechend der Winkelstellung des Steuerknopfes gesteuert, d.h. je weiter der Steuerknopf gedreht wird, desto schneller wird das Band transportiert (sog. "shuttle mode"). Diese Betriebsart wird im wesentlichen verwendet, um eine vergleichsweise weit entfernte Bandstelle schnell anzufahren. In der zweiten Axialstellung wird die Bandgeschwindigkeit entsprechend der Drehgeschwindigkeit des Steuerknofpes gesteuert (sog. "jog mode"). Diese Betriebsart wird verwendet, um eine gewünschte Bandposition, insbesondere ein bestimmtes Einzelbild, exakt anzufahren.

Diese bekannte Betriebsartenwählvorrichtung weist jedoch Nachteile auf. So ist ein gesonderter Betriebsartenwählmechanismus notwendig, um die normalen Steuerfunktionen des Videoband-Wiedergabegerätes auszuschalten und um oder oben be-schriebenen Betriebsartenwählvorrichtung zu er-möglichen, den Bandtransport zu steuern. Weiterhin ist bei der Fertigung der bakannten Betriebsar-tenwählvorrichtung ein vergleichsweise hoher Auf-wand notwending. Ferner ist bei der bekannten Betriebsartenwählvorrichtung eine Änderung der Transportrichtung des Magnetbandes nur dadurch möglich, daß der Steuerknopf über seine Neutralstellung zurückgedreht wird.

Der Erfindung liegt die Aufgabe zugrunde, eine Einknopfbedienung anzugeben, die die oben genannten Nachteile nicht aufweist.

Diese Aufgabe wird durch die im Patentanspruch 1 angegebenen Merkmale gelöst. Vorteilhafte Weiterbildungen ergeben sich aus den Unteransprüchen.

Die Vorteile der Erfindung liegen insbesondere darin, daß sämtliche zum Auffinden bestimmter Szenen auf einem Magnetband erforderlichen Bedienungsschritte mittels eines einzigen Drehknopfes gesteuert werden können. Ein Bandtransport in Vorwärts- bzw. Rückwärtsrihtung mit einer beliebi-gen Bandgeschwindigkeit im Bereich

$$0 \leq v \leq 12 \cdot v_{Normal}$$

wird durch eine mehr oder weniger weite Rechts-bzw. Linksdrehung des Drehknopfes ausgelöst. Ein Drücken des Drehknopfes bewirkt eine augenblickliche Umschaltung in den Standbildbetrieb, und zwar unabhängig von der Winkelstellung des Drehknopfes und damit unabhängig von der momenta-nen Bandtransportgeschwindigkeit. Ein wiederhol-tes Drücken des Drehknopfes bewirkt eine Standbildfortschaltung in Vortwärts- oder in Rückwärtsrichtung. Weitere vorteilhafte Eigenschaften der beanspruchten Einknopfbedienung ergeben sich aus einem Ausführungsbeispiel, welches im folgenden anhand der (einzigen) Figure näher erläutert wird.

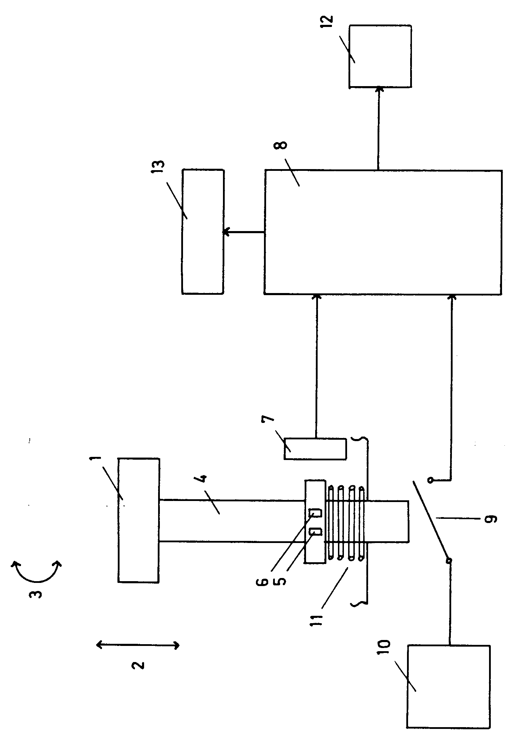

Die Figur zeigt einen Drehknopf 1, der am Bedienteil eines (nicht gezeichneten) herkömmlichen Videomagnetbandrecorders angeordnet ist. Ferner enthält das Bedienteil die üblichen weiteren Bedienelemente zur Steuerung der grundsätzlich bekannten Betriebszustände des Recorders.

Der Drehknopf 1 kann - wie es durch die Pfeile 2 und 3 angeordnet ist, manuell nach links oder rechts verdreht und axial bewegt werden. Der Drehknopf 1 ist mit einer Welle 4 starr verbunden. Auf der Welle 4 sind Impulsgeber 5 und 6 angebracht, die bei einer Drehung der Welle in einem Impulsempfänger 7 Impulse erzeugen. Diese Impulse werden an eine Auswertestufe 8 weitergeleitet, welche vorzugsweise ein Mikrocomputer ist.

Bei einem Drücken bzw. axialen Bewegen des Drehknopfes 1 schließt dieser einen Schalter 9, so daß das Ausgangssignal einer Spannungsquelle 10 der Auswertestufe 8 zugeführt wird. Nach dem Loslassen des Drehknopfes 1 wird dieser durch eine Rückstellfeder 11 in axialer Richtung in seine Ausgangslage zurückgestellt.

Die Auswertestufe 8 ist mit dem Bandtriebsmotor 12 des Videomagnetbandrecorders verbunden, um diesen entsprechend der vom Benutzer durch Betätigung des Drehknopfes festgelegten Betriebsart zu steuern, wie im folgenden anhand eines Beispiels erläutert wird: Es sei angenommen, der Magnetbandrecorder befindet sich im normalen Weidergabebtrieb, d.h. der Bandantriebsmotor 12 bewegt das Magnetband mit Normalgeschwindigkeit in Vorwärtsrichtung, und der Benutzer möchte eine bestimmte Einzelszene aufsuchen, die sich in Vorwärtsrichtung an einer vergleichsweise weit entfernten Bandstelle befindet.

Hierzu drückt der Benutzer zunächst den Drehknopf 1, so daß sich dieser und die mit ihm starr verbundene Welle 4 in axialer Richtung bewegen und den Schalter 9 schließen. Durch den geschlossenen Schalter 9 fließt dann ein in einer Spannungsquelle 10 erzeugter Strom zum Mikrocomputer 8. Dieser setzt sofort den Bandantriebsmotor 12 still, so daß auf einem (nicht gezeichneten) mit dem Videorecorder verbundenen Bildschirm ein Standbild weidergegeben wird. Nach dem Loslassen des Drehknopfes 1 werden die Welle 4 und der Drehknopf 1 durch eine Rückstellfeder 11 wieder axial in ihre Ausgangsstellungen zurückgestellt.

Anschließend verdreht der Benutzer den Drehknopf 1 nach rechts. Diese Verdrehung bewirkt, daß sich die mit Drehknopf 1 ind der Welle 4 starr verbundenen Impulsgeber 5 und 6, die beispielsweise um einen Winkel von 90° gegeneinander versetzt sind, an einem Impulsempfänger 7 vorbeibewegen und in diesem Impulse erzeugen. Diese werden dem Mikrocomputer 8 zugeführt, der die erhaltenen Impulse im Sinne einer Erkennung der Drehrichtung und der Winkelstellung des Drehknopfes auswertet. Der Mikrocomputer 8 führt dem Bandantriebsmotor 12 ein Steuersignal zu, aufgrund dessen dieser das Magnetband mit einer von der Winkelstellung des Drehknopfes 1 abhängigen Bandtransportgeschwindigkeit in Vorwärtsrichtung bewegt. Während dieser Vorwärtsbewegung mit maximal 12-facher Normalgeschwindigkeit kann der Benutzer das wiedergegebene Bild am Bildschirm verfolgen.

Nähert sich das Band der gewünschten Bandstelle, so kann der Benutzer durch leichtes Zurückdrehen des Drehknopfes 1 die Bandtransportgeschwindigkeit verringern, um die gewünschte Einzelszene möglichst genau anzufahren.

Befindet sich das Band schließlich in unmittelbarer Nähe der gewünschten Einzelszene bzw. des gewünschten Einzelbildes, dann drückt der Benutzer erneut den Drehknopf 1, um eine Standbildwiedergabe zu erreichen.

Das gewünschte Einzelbild wird schließlich angefahren durch ein mehrmaliges Drücken des Drehknopfes 1. Dieses mehrmalige Drücken des Drehknopfes 1 bewirkt eine Standbildfortschaltung in Vorwärtsrichtung bis zum Erreichen des gewünschten Einzelbildes. Eine Standbildfortschaltung in Vorwärtsrichtung erfolgt automatisch deshalb, wei die letzte Bandbewegung vor dem mehrmaligen Drücken des Drehknopfes in Vorwärtsrichtung erfolgte.

Im folgenden sei angenommen, daß durch die Vorwärtsbewegung des Magnetbandes mit 12-facher Normalgeschwindigkeit das gewünschte Einzelbild versehentlich überfahren wurde und folglich die Transportrichtung umgekehrt werden muß. Hierzu genügt ein einmaliges Drücken des Drehknopfes 1 und ein anschließendes Drehen des Drehknopfes 1 nach links. Durch das einmalige Drücken des Drehknopfes 1 wird der Bandantriebsmotor stillgesetzt. Das anschließend Drehen des Drehknopfes 1 nach links bewirkt dann sofort einen Bandtransport in Rückwärtsrichtung. Ein Zurückdrehen des Drehknopfes in seine Ausgangstellung ist folglich nicht notwendig.

Mittels der beschriebenen Einknopfbedienung ist es folglich möglich, das Magnetband mit einer beliebigen Geschwindigkeit im Bereich

$$O \leq v \leq 12 \cdot v_{Normal}$$

vorwärts oder rückwärts zu bewegen, bei jeder Bandgeschwindigkeit augenblicklich in den Standbildbetrieb umzuschalten und im Bedarfsfall ein Standbildfortschaltung in Vorwärts- oder Rückwärtsrihtung durchzuführen.

Eine vorteilhafte Weiterbildung besteht darin, den Mikrcomputer 8 mit einer Anzeige 13 zu verbinden, auf der die Richtung und die Geschwindigkeit des Bandtransports symbolisch angezeigt wird.

**Patentansprüche**

1. Einknopfbedienung für den Rangierbetrieb bei Videomagnetbandrecordern, mit
   - einem manuell nach links oder rechts verdrehbaren und entgegen einer Rückstellfeder (11) axial bewegbaren Drehknopf (1), wobei mittels einer Links-bzw. Rechtsdrehung des Drehknopfes eine Rückwärts-bzw. Vorwärtsbewegung eines Magnetbandes mit einer von der Winkelstellung des Drehknopfes abhängigen Bandtransportgeschwindigkeit auslösbar ist,
   - einer mit dem Drehknopf starr verbundenen Welle (4),
   - mindestens zwei mit der Welle verbundenen Impulsgeben (7), die bei einer Drehung der Welle Impulse erzeugen,
   - einem Schalter (9), der durch die axiale Bewegung des Drehknopfes unabhängig von der Winkelstellung des Drehknopfes betätig-bar ist,
   - einer Auswertestufe (8) zur Auswertung des Ausgangssignals des Schalters und der von den Impulsgebern erzeugten Impulse zur Ermittlung von Drehrichtung und Winkelstellung des Drehknopfes, und
   - einem Bandantriebsmotor (12), welcher von der Auswertestufe gesteuert wird, dadurch gekennzeichnet, daß
   - die Auswertestufe derart ausgebildet ist, daß in Ansprache auf das Ausgangssignal des Schalters der Bandantriebsmotor zu einer Standbildweidergabe stillgesetzt wird, und
   - eine Rückstellfeder nach manuellen Loslassen des Drehknopfes diesen in axialer Richtung in seine Ausgangslage zurückstellt.

2. Einknopfbedienung nach Anspruch 1, dadurch gekennzeichnet, daß die Auswerteschaltung ein Mikrocomputer ist.

3. Einknopfbedienung nach Anspruch 2, dadurch gekennzeichnet, daß durch den Mikrocomputer bei einer unmittelbar aufeinanderfolgenden mehrmaligen axialen Bewegung des Drehknopfes der Bandantriebsmotor im Sinne einer Standbildfortschaltung steuerbar ist.

4. Einknopfbedienung nach Anspruch 3, dadurch gekennzeichnet, daß die Standbildfortschaltung in der Richtung erfolgt, in der jeweils vor der mehrmaligen axialen Bewegung des Drehknopfes die Bandbewegung erfolgte.

5. Einknopfbedienung nach einem der Ansprüche 1-4, dadurch gekennzeichnet, daß der Mikrocomputer mit einer Anzeige (13) verbunden ist, die die Richtung und die Geschwindigkeit des Bandtransports symbolisch anzeigt.

**Claims**

1. Single-knob control for the shuttle mode for video tape recorders, having
   - a rotating knob (1) which can be rotated manually to the left or right and can be moved axially against a return spring (11), it being possible to initiate a reverse or forwards movement of a magnetic tape by rotating the knob to the left or right respectively, at a tape transportation speed depending on the angular position of the rotating knob,
   - a shaft (4) which is rigidly connected to the rotating knob,
   - at least two pulse transmitters (7) which are connected to the shaft and generate pulses when the shaft is rotated,
   - a switch (9) which can be operated by the axial movement of the rotating knob, independently of the angular position of the rotating knob,
   - an evaluation stage, for evaluating the output signal of the switch and the pulses generated by the pulse transmitters, in order to determine the rotation direction and angular position of the rotating knob, and
   - a tape drive motor (12) which is controlled by the evaluation stage, characterised in that

   - the evaluation stage is constructed in such a manner that the tape drive motor is stopped for freezeframe reproduction in response to the output signal of the switch, and
   - a return spring resets the rotating knob to its original position in the axial direction once said rotating knob has been manually released.

2. Single-knob control according to Claim 1, characterised in that the evaluation circuit is a microcomputer.

3. Single-knob control according to Claim 2, characterised in that, in the event of immediately successive repeated axial movement of the rotating knob, the tape drive motor can be controlled by the microcomputer in the sense of onward switching of the freeze-frame.

4. Single-knob control according to Claim 3, characterised in that the onward switching of the freeze-frame takes place in the direction in which the tape was moving respectively before the repeated axial movement of the rotating knob.

5. Single-knob control according to Claims 1-4, characterised in that the microcomputer is connected to a display (13) which shows the tape transportation direction and speed symbolically.

**Revendications**

1. Commande à un seul bouton pour la commande de magnétoscopes, comportant
   - un bouton rotatif (1) que l'on peut manuellement faire tourner à gauche ou à droite et déplacer axialement à l'encontre d'un ressort de rappel (11), un déplacement rétrograde ou une avance d'une bande magnétique à une vitesse de défilement qui dépend de la position angulaire du bouton rotatif, pouvant être déclenché au moyen d'une rotation à gauche ou à droite de ce bouton,
   - un arbre (4) raccordé rigidement au bouton rotatif,
   - au moins deux générateurs d'impulsions (7) raccordés à l'arbre et produisant des impulsions lors d'une rotation de l'arbre,
   - un interrupteur (9), qui peut être actionné sous l'effet du déplacement axial du bouton rotatif, indépendamment de la position angulaire de ce bouton,
   - un étage d'évaluation (8) servant à évaluer le signal de sortie de l'interrupteur et les impulsions produites par le générateur d'impulsions pour déterminer le sens de rotation et la position angulaire du bouton rotatif, et

-   un moteur (12) d'entraînement de la bande, qui est commandé par l'étage d'évaluation,
    caractérisée en ce que
-   l'étage d'évaluation est agencé de telle sorte qu'en réponse au signal de sortie de l'interrupteur, le moteur d'entraînement de la bande est arrêté pour une reproduction d'images fixes et
-   après relâchement manuel du bouton rotatif, un ressort de rappel ramène ce dernier, dans la direction axiale, dans sa position initiale.

2.  Commande à un seul bouton selon la revendication 1, caractérisée en ce que le circuit d'évaluation est un micro-ordinateur.

3.  Commande à bouton rotatif selon la revendication 2, caractérisée en ce que dans le cas de plusieurs actionnements axiaux directement successifs du bouton rotatif, le moteur d'entraînement de la bande peut être commandé par le micro-ordinateur dans le sens d'une avance (10) d'images fixes.

4.  Commande à bouton rotatif selon la revendication 3, caractérisée en ce que l'avance des images fixes s'effectue dans la direction dans laquelle le déplacement de la bande a été exécuté respectivement avant le déplacement axial, effectué à plusieurs reprises, du bouton rotatif.

5.  Commande à un seul bouton selon l'une des revendications 1-4, caractérisée en ce que le micro-ordinateur est raccordé à un dispositif d'affichage (13), qui indique par des symboles la direction et la vitesse de déplacement de la bande.